# EUROPEAN PATENT APPLICATION

(11) **EP 4 120 184 A1**
(43) Date of publication of application: **18.01.2023**
(21) Application number: 20923937.5
(22) Date of filing: 15.07.2020
(51) Int. Cl.: G06T 7/00

(54) **INFORMATION PROCESSING DEVICE, INFORMATION PROCESSING METHOD, AND PROGRAM**

(30) Priority: 09.03.2020 US 202062987057 P
(71) Applicant: Sony Group Corporation, Tokyo 108-0075 (JP)
(72) Inventor: SATO, Tatsuhito, Tokyo 108-0075 (JP)
(74) Representative: MFG Patentanwälte Meyer-Wildhagen Meggle-Freund Gerhard PartG mbB
(86) International application number: PCT/JP2020/027518
(87) International publication number: WO 2021/181715

(57) **Abstract**

[Object] To provide an information processing method, an information processing apparatus, and a program, by which the accuracy of facial authentication can be improved even in a case where there is an occluded region.

[Solving Means] An information processing apparatus includes a determination unit and a generation unit. The determination unit determines, on the basis of an occluded region of a face in an input facial image for authentication, a trimming facial range from the input facial image for authentication and a resolution. The generation unit generates a facial image for authentication in/at the trimming facial range and the resolution determined by the determination unit.

## Description

### Technical Field

The present technology relates to an information processing apparatus, an information processing method, and a program.

### Background Art

Patent Literature 1 has proposed comparing a standard facial image with an input facial image to estimate an occluded region in the input facial image and performing facial identification in a region excluding the occlusion, to thereby perform identification even in a case where there is an occluded region.

### Citation List

### Patent Literature

Patent Literature 1: Japanese Patent Application Laid-open No. 2016-81212

### Disclosure of Invention

### Technical Problem

In Patent Literature 1, only processing of simply excluding an occluded region is performed irrespective of the size of the occluded region. Therefore, there is a problem in that as the size of the occluded region increases, information that can be acquired from the facial image decreases, which lowers the accuracy of facial identification.

In view of the above-mentioned circumstances, it is an objective of the present technology to provide an information processing method, an information processing apparatus, and a program, by which the accuracy of facial authentication can be improved even in a case where there is an occluded region.

### Solution to Problem

In order to accomplish the above-mentioned objective, an information processing apparatus according to an embodiment of the present technology includes a determination unit and a generation unit.

The determination unit determines, on the basis of an occluded region of a face in an input facial image for authentication, a trimming facial range from the input facial image for authentication and a resolution.

The generation unit generates a facial image for authentication in/at the trimming facial range and the resolution determined by the determination unit.

The determination unit may determine the trimming facial range and the resolution to be used for generating the facial image for authentication from a plurality of combinations of facial ranges to be trimmed and resolutions, the plurality of combinations being determined in advance.

The information processing apparatus may further include:
a facial part detection unit that detects a plurality of facial part points from the input facial image for authentication and calculates reliability for each of the facial part points; and
an occluded-region detection unit that detects, from the plurality of facial part points on the basis of the reliability, occlusion part points associated with the occluded region, in which
an assessment value may be associated with each of the plurality of combinations, and
the determination unit may select, from the plurality of combinations, a combination, the trimming facial range of which does not overlap the occlusion part points and the assessment value of which is highest, and determine the combination as a combination to be used for generating the facial image for authentication.

The information processing apparatus may further include:
a facial-image-with-score generation unit that generates a facial image with a score indicating a degree of validity in facial identification; and
an occluded-region detection unit that detects, on the basis of pixel information that constitutes the facial image with the score, occluded pixels associated with the occluded region, in which
an assessment value may be associated with each of the plurality of combinations, and
the determination unit may select, from the plurality of combinations, a combination, the trimming facial range of which does not overlap the occluded pixels and the assessment value of which is highest, and determine the combination as a combination to be used for generating the facial image for authentication.

The resolution may be, for each of the combinations, set so that a facial image for authentication to be trimmed in the trimming facial range is generated with a constant amount of calculation.

The information processing apparatus may further include
a feature amount extraction unit that extracts a feature amount of the facial image for authentication, in which
the amount of calculation may be calculated using the total number of pixels of the trimming facial range or the number of multiply-accumulate operations at a time of feature amount extraction by the feature amount extraction unit.

The information processing apparatus may further include:
a feature amount extraction unit that extracts a feature amount of the facial image for authentication; and
a degree-of-similarity calculation unit that calculates, on the basis of the feature amount of the facial image for authentication that is extracted by the feature amount extraction unit and a feature amount of a facial image for registration that is prepared in advance, a degree of similarity of the facial image for authentication and the facial image for registration.

The feature amount of the facial image for registration may be a feature amount extracted by the feature amount extraction unit in each of a plurality of facial images for registration generated in accordance with the plurality of combinations using an input facial image for registration that is prepared in advance.

In order to accomplish the above-mentioned objective, an information processing method according to an embodiment of the present technology includes:
determining, on the basis of an occluded region of a face in an input facial image for authentication, a trimming facial range from the input facial image for authentication and a resolution; and
generating a facial image for authentication in/at the determined trimming facial range and resolution.

In order to accomplish the above-mentioned objective, a program according to an embodiment of the present technology causes an information processing apparatus to execute:
a step of determining, on the basis of an occluded region of a face in an input facial image for authentication, a trimming facial range from the input facial image for authentication and a resolution; and
a step of generating a facial image for authentication in/at the determined trimming facial range and resolution.

### Brief Description of Drawings

[Fig. 1] A functional block diagram of an information processing apparatus used for facial information registration according to an embodiment.
[Fig. 2] A schematic diagram describing a flow of the facial information registration.
[Fig. 3] A processing flow diagram of the facial information registration using the information processing apparatus of Fig. 1.
[Fig. 4] A functional block diagram of the information processing apparatus used for facial authentication according to the first embodiment.
[Fig. 5] A diagram describing facial part points.
[Fig. 6] A schematic diagram describing a flow of the facial authentication.
[Fig. 7] A processing flow diagram of the facial authentication in the information processing apparatus of Fig. 4.
[Fig. 8] A detailed flow diagram of determination processing of a trimming facial range and a resolution to be employed in the processing flow of Fig. 7.
[Fig. 9] A diagram describing examples of combinations of trimming facial ranges and resolutions, which are shown in a facial range and resolution list.
[Fig. 10] A functional block diagram of an information processing apparatus used for facial authentication according to a second embodiment.
[Fig. 11] A processing flow diagram of the facial authentication using the information processing apparatus of Fig. 10.
[Fig. 12] A detailed flow diagram of determination processing of a trimming facial range and a resolution to be employed in the processing flow of Fig. 11.
[Fig. 13] A diagram describing facial images with scores in the second embodiment.
[Fig. 14] A schematic diagram describing the facial authentication.
[Fig. 15] A schematic diagram describing the facial authentication. Mode(s) for Carrying Out the Invention

Hereinafter, an information processing apparatus according to the present technology will be described with reference to the drawings.

### <Overview Description>

In this embodiment, information regarding a facial image for registration to be compared with a facial image for authentication to be used in facial authentication is prepared in advance. Then, the information regarding the facial image for registration and information regarding the facial image for authentication to be authenticated are compared with each other and it is determined whether or not a person to be authenticated is a person registered in advance.

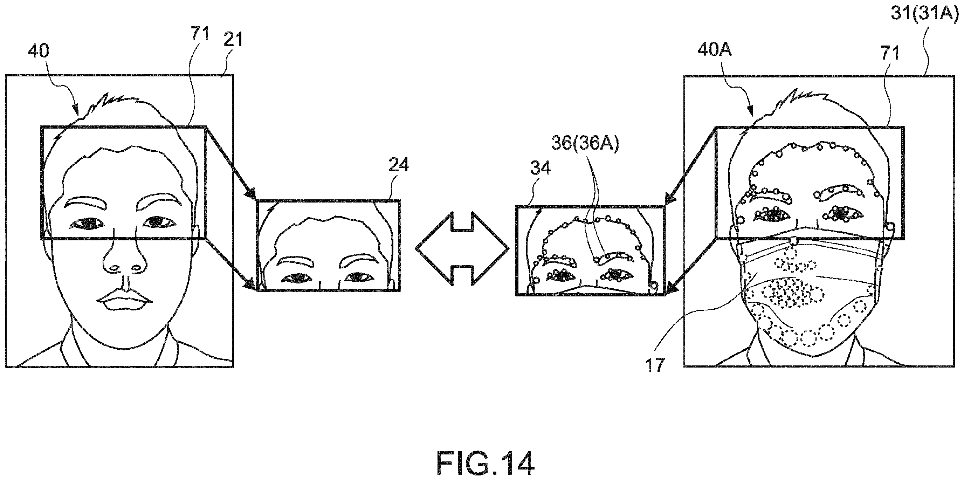

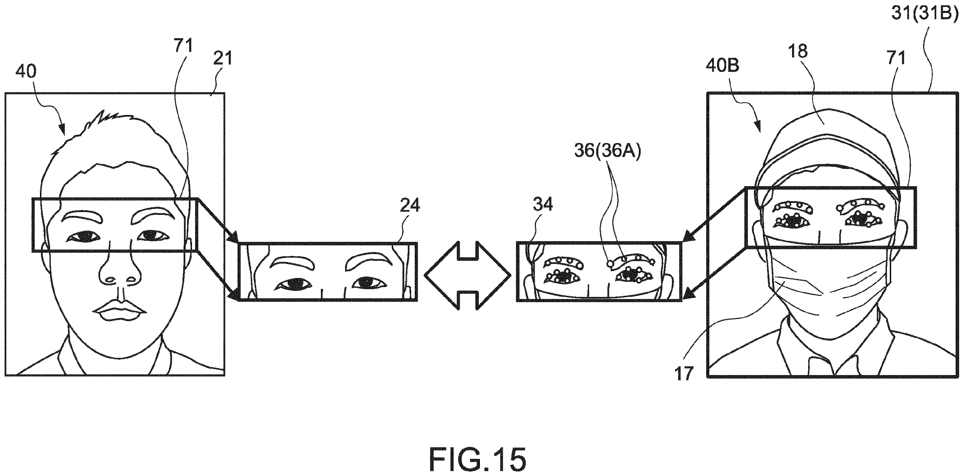

Figs. 14 and 15 are schematic diagrams for describing the overview of a facial authentication method according to an embodiment of the present technology.

In Figs. 14 and 15, the left side of the two-way arrow shows an input facial image for registration 21 and a facial image for registration 24. The right side of the two-way arrow shows an input facial image for authentication 31 and a facial image for authentication 34. The facial image for registration 24 is an image trimmed from the input facial image for registration 21. The facial image for authentication 34 is an image trimmed from the input facial image for authentication 31.

The input facial image for registration 21 in Fig. 14 is an image of a person 40 who does not wear an occlusion object that occludes the face, such as a mask and a cap. The input facial image for authentication 31 in Fig. 14 is an image of a person 40A wearing a mask 17, and here it is denoted by the reference sign 31A.

The input facial image for registration 21 in Fig. 15 is an image of the person 40 who does not wear an occlusion object that occludes the face, such as a mask and a cap. The input facial image for authentication in Fig. 15 is an image of a person 40B wearing a cap 18 in addition to the mask 17, and here it is denoted by the reference sign 31B.

In this embodiment, the facial image for authentication 34 is generated in/at more suitable trimming facial range and resolution on the basis of information regarding a region occluded by the occlusion object such as the mask 17 and the cap 18 in the input facial image for authentication 31A, 31B. Information regarding the thus generated facial image for authentication 34 and information regarding the facial image for registration 24 registered in advance are compared with each other, and in this manner it is determined whether or not the person to be authenticated is a person registered in advance.

Hereinafter, first and second embodiments will be described.

### <First Embodiment>

As described above, information regarding a facial image for registration to be compared in facial authentication is prepared in advance, and the information regarding the facial image for registration and information regarding a facial image for authentication are compared with each other and facial authentication is performed.

In the first embodiment, a trimming facial range and a resolution to be used for generating the facial image for authentication are determined using facial part points and reliability of the facial part points. Hereinafter, it will be described in detail.

In the description associated with the first embodiment, the facial information registration and the facial authentication will be described in the stated order.

### [Regarding Facial Information Registration]

### (Configuration of Information Processing Apparatus)

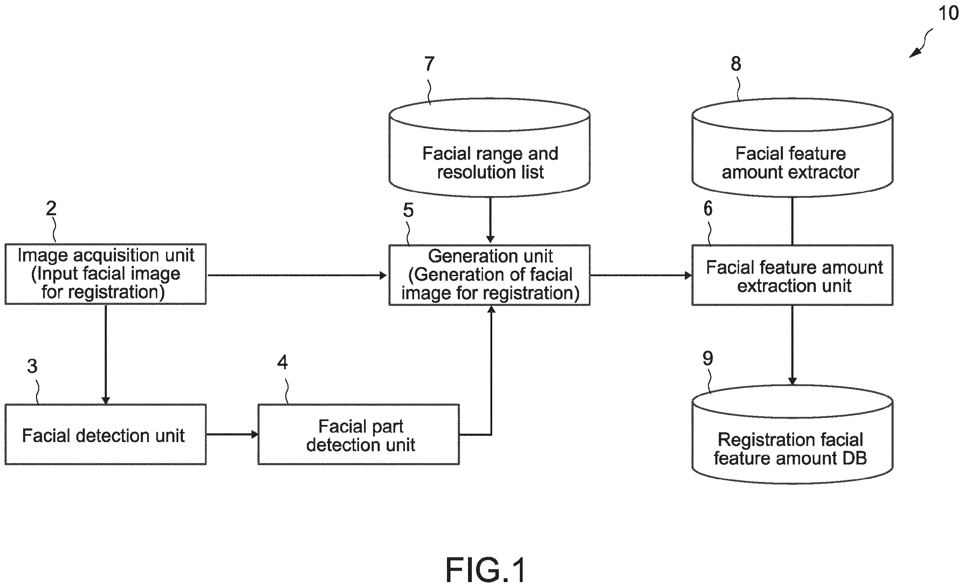

Referring to Fig. 1, an information processing apparatus 10 used in the facial information registration will be described.

As shown in Fig. 1, the information processing apparatus 10 includes an image acquisition unit 2, a facial detection unit 3, a facial part detection unit 4, a generation unit 5, a facial feature amount extraction unit 6, a facial range and resolution list 7, a facial feature amount extractor 8, and a registration facial feature amount database (DB) 9.

The image acquisition unit 2 acquires a facial image of a person to be registered (referred to as input facial image for registration), which is taken by a camera (not shown) or the like.

The facial detection unit 3 detects a facial portion from the input facial image for registration acquired by the image acquisition unit 2.

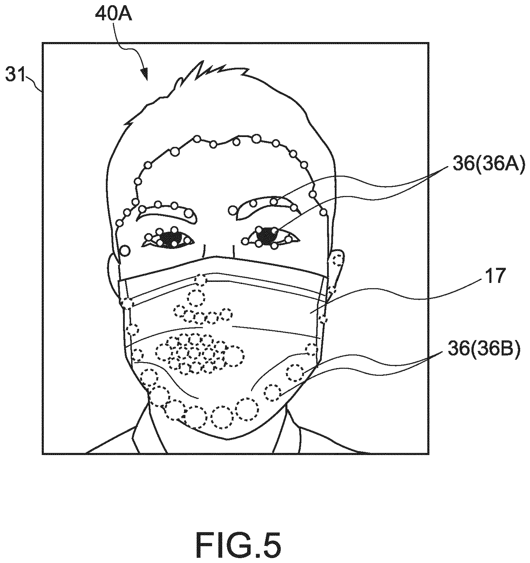

The facial part detection unit 4 detects facial part points from the facial portion detected by the facial detection unit 3. The facial part points are a plurality of points that define shapes of respective parts that are constituent elements of the face, such as eyebrows, eyes, a nose, a mouth, ears, and a hair line. An existing method can be used as a facial part point-detecting algorithm. For example, in an input facial image for registration 31 of the person 40A wearing the mask 17 shown in Fig. 5, the facial part points are represented as small circles denoted by the reference signs 36.

The generation unit 5 generates a plurality of facial images for registration. The generation unit 5 generates, on the basis of a plurality of mutually different combinations of trimming facial ranges (hereinafter, sometimes referred to as facial ranges) and resolutions, which are shown in the facial range and resolution list 7 prepared in advance, a plurality of facial images for registration for each of the combinations. The facial range and resolution list 7 has information regarding trimming facial ranges, resolutions, and assessment values that are associated with one another. The details of the facial range and resolution list 7 will be described later.

The facial feature amount extraction unit 6 extracts a facial feature amount in each of the plurality of facial images for registration generated by the generation unit 5, using the facial feature amount extractor 8.

In the registration facial feature amount DB 9, information regarding each of the plurality of facial images for registration is stored. For example, as the information regarding the facial image for registration, a facial image for registration, information regarding facial range and resolution used when generating the facial image for registration, a facial feature amount extracted by the facial feature amount extraction unit 6, and a used input facial image for registration are associated with one another.

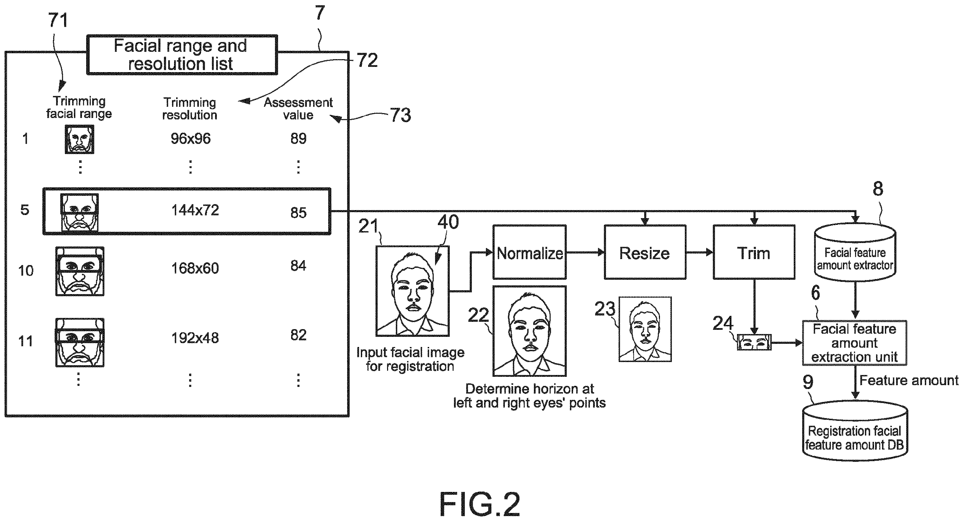

Fig. 2 is a schematic diagram describing a flow of facial information registration processing.

As shown in Fig. 2, the image acquisition unit 2 acquires the input facial image for registration 21 of the person 40 to be registered. Facial detection and facial part point detection are performed on the input facial image for registration 21. The input facial image for registration 21 is normalized so that a virtual line connecting the left and right eyes is horizontal on the basis of a detection result of the facial part points. In Fig. 2, the normalized facial image is denoted by the reference sign 22. After that, on the basis of the facial range and resolution in each combination shown in the facial range and resolution list 7, the generation unit 5 performs resizing and trimming and generates a plurality of facial images for registration 24. Next, the feature amount extraction unit 6 extracts a feature amount from each of the plurality of facial images for registration 24, using the facial feature amount extractor 8. The extracted feature amount is stored in the registration facial feature amount DB 9. In this manner, the person facial information is registered.

It should be noted that here, the example in which the processing is performed in the order of normalization, resizing, and trimming, though not limited thereto. For example, the processing may be performed in the order of resizing, normalization, and trimming or performed in the order of normalization, trimming, and resizing.

The facial range and resolution list 7 will be described.

As shown in Fig. 2, the facial range and resolution list 7 includes information regarding a plurality of combinations of trimming facial ranges 71 and resolutions 72 of the facial range 71. In addition, in the facial range and resolution list 7, an assessment value 73 is set associated with each of the plurality of combinations of the facial ranges 71 and the resolutions 72. The assessment value 73 is a fixed value, and calculated and determined in advance for each of the combinations. The assessment value 73 indicates an assessment of the combination. The assessment values 73 in the facial range and resolution list 7 are used in the facial authentication to be described later. As the assessment value 73 becomes higher, it indicates that the facial authentication accuracy in the facial image for authentication, which is generated with the corresponding combination, becomes higher.

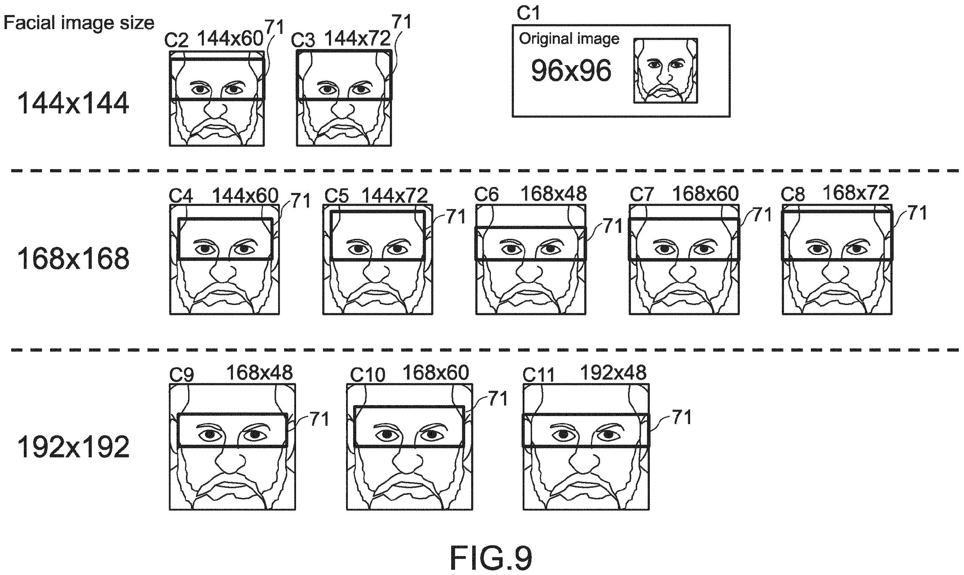

The details of the facial range and resolution list 7 will be described with reference to Figs. 2 and 9. Fig. 9 is a diagram describing combination examples included in the facial range and resolution list 7. As shown in Fig. 9, for example, the facial range and resolution list 7 has eleven combinations C1 to C11 of the facial range and the resolution. It should be noted that the number of combinations, the facial range, the numeric values of the resolution are not limited to those shown here.

In each of the combinations shown in the facial range and resolution list 7, the combination of the facial range and the resolution is set so that the facial image for authentication is generated with a constant amount of calculation. In other words, the resolution is, for each of the combinations, set so that the facial image for authentication is generated in the trimming facial range with a constant amount of calculation. The amount of calculation can be calculated using the total number of pixels of a facial range to be trimmed or the number of multiply-accumulate operations at the time of feature amount extraction by the facial feature amount extraction unit 6.

Accordingly, the generation processing of the facial image for authentication can be finished always in a constant time.

As shown in Fig. 9, an image generated on the basis of the combination C1 in the facial range and resolution list 7 is a facial image in a facial range detected by the facial detection unit 3 and is an original image. A resolution (number of pixels) 72 of this original image is, for example, 96 x 96. That is, in the combination C1 in the facial range and resolution list 7, the trimming facial range 71 is the entire facial range and the resolution is 96 x 96.

During the facial information registration processing, on the basis of the combination C1, the generation unit 5 generates the original image having a size of 96 x 96, the trimming facial range of which is the entire facial range.

In the combination C2 in the facial range and resolution list 7, the trimming facial range 71 is a region including the both eyes and a part of the hair line trimmed from an image by resizing the original image in 144 x 144. The resolution (number of pixels) 72 of the trimming facial range 71 is 144 x 60.

During the facial information registration processing, on the basis of the combination C2, the generation unit 5 generates a facial image for registration by resizing the original image in 144 x 144 and then trimming, as the facial range 71, the region including the both eyes and the part of the hair line at the resolution 72 of 144 x 60.

In the combination C3 in the facial range and resolution list 7, the trimming facial range 71 is a region including the both eyes and a part of the hair line, which is trimmed from an image by resizing the original image in 144 x 144. The resolution (number of pixels) 72 of the trimming facial range 71 is 144 x 72.

During the facial information registration processing, on the basis of the combination C3, the generation unit 5 generates a facial image for registration by resizing the original image in 144 x 144 and then trimming, as the facial range 71, the region including the both eyes and the part of the hair line at the resolution 72 of 144 x 72. The facial image for registration generated with the combination C3 has a wider hair line range than the facial image for registration generated with the combination C2.

In the combination C4 in the facial range and resolution list 7, the trimming facial range 71 is a region including the both eyes and a part of the hair line, which is trimmed from an image by resizing the original image in 168 x 168. The resolution (number of pixels) 72 of the trimming facial range 71 is 144 x 60.

During the facial information registration processing, on the basis of the combination C4, the generation unit 5 generates a facial image for registration by resizing the original image in 168 x 168 and then trimming, as the facial range 71, the region including the both eyes and the part of the hair line at the resolution 72 of 144 x 60.

In the combination C5 in the facial range and resolution list 7, the trimming facial range 71 is a region including the both eyes and a part of the hair line, which is trimmed from an image by resizing the original image in 168 x 168 and the resolution (number of pixels) 72 of the trimming facial range 71 is 144 x 72.

During the facial information registration processing, on the basis of the combination C5, the generation unit 5 generates a facial image for registration by resizing the original image in 168 x 168 and then trimming, as the facial range 71, the region including the both eyes and the part of the hair line at the resolution 72 of 144 x 72. The facial image for registration generated with the combination C5 has a wider hair line region than the facial image for registration generated with the combination C4. Moreover, the facial image for registration generated with the combination C5 has the same range in the width direction of the face as the facial image for registration generated with the combination C4.

In the combination C6 in the facial range and resolution list 7, the trimming facial range 71 is a region including the both eyes, which is trimmed from an image by resizing the original image in 168 x 168, and the resolution (number of pixels) 72 of the trimming facial range 71 is 168 x 48.

During the facial information registration processing, on the basis of the combination C6, the generation unit 5 generates a facial image for registration by resizing the original image in 168 x 168 and then trimming, as the facial range 71, a region including the both eyes at the resolution 72 of 168 x 48. The facial image for registration generated with the combination C6 does not include the hair line region. Moreover, the facial image for registration generated with the combination C6 has a larger range in the width direction of the face than the facial image for registration generated with the combination C4 or C5.

In the combination C7 in the facial range and resolution list 7, the trimming facial range 71 is a region including the both eyes and a part of the hair line, which is trimmed from an image by resizing the original image in 168 x 168, and the resolution (number of pixels) 72 of the trimming facial range 71 is 144 x 60.

During the facial information registration processing, on the basis of the combination C7, the generation unit 5 generates a facial image for registration by resizing the original image in 168 x 168 and then trimming, as the facial range 71, the region including the both eyes and the part of the hair line at the resolution 72 of 144 x 60.

In the combination C8 in the facial range and resolution list 7, the trimming facial range 71 is a region including the both eyes and a part of the hair line, which is trimmed from an image by resizing the original image in 168 x 168, and the resolution (number of pixels) 72 of the trimming facial range 71 is 168 x 72.

During the facial information registration processing, on the basis of the combination C8, the generation unit 5 generates a facial image for registration by resizing the original image in 168 x 168 and then trimming, as the facial range 71, the region including the both eyes and the part of the hair line at the resolution 72 of 168 x 72. The facial image for registration generated with the combination C8 has a wider hair line region than the facial image for registration generated with the combination C7. Moreover, the facial image for registration generated with the combination C8 has the same range in the width direction of the face as the facial image for registration generated with the combination C6 or C7.

In the combination C9 in the facial range and resolution list 7, the trimming facial range 71 is a region including the both eyes, which is trimmed from an image by resizing the original image in 192 x 192, and the resolution (number of pixels) 72 of the trimming facial range 71 is 168 x 48.

During the facial information registration processing, on the basis of the combination C9, the generation unit 5 generates a facial image for registration by resizing the original image in 192 x 192 and then trimming, as the facial range 71, the region including the both eyes at the resolution 72 of 168 x 48. The facial image for registration generated with the combination C9 does not include the hair line region.

In the combination C10 in the facial range and resolution list 7, the trimming facial range 71 is a region including the both eyes and a little part of the hair line, which is trimmed from an image by resizing the original image in 192 x 192, and the resolution (number of pixels) 72 of the trimming facial range 71 is 168 x 60.

During the facial information registration processing, on the basis of the combination C10, the generation unit 5 generates a facial image for registration by resizing the original image in 192 x 192 and then trimming, as the facial range 71, the region including the both eyes and the little part of the hair line at the resolution 72 of 168 x 60. The facial image for registration generated with the combination C10 has the same range in the width direction of the face and a larger range in the height direction orthogonal to the width direction as compared with the facial image for registration generated with the combination C9.

In the combination C11 in the facial range and resolution list 7, the trimming facial range 71 is a region including the both eyes, which is trimmed from an image by resizing the original image in 192 x 192, and the resolution (number of pixels) 72 of the trimming facial range 71 is 192 x 48.

During the facial information registration processing, on the basis of the combination C11, the generation unit 5 generates a facial image for registration by resizing the original image in 192 x 192 and then trimming, as the facial range 71, a region including the both eyes at the resolution 72 of 192 x 48. The facial image for registration generated with the combination C11 has a wider range in the width direction of the face and the same range in the height direction as compared with the facial image for registration generated with the combination C9.

### (Information Processing Method Associated with Registration of Facial Information)

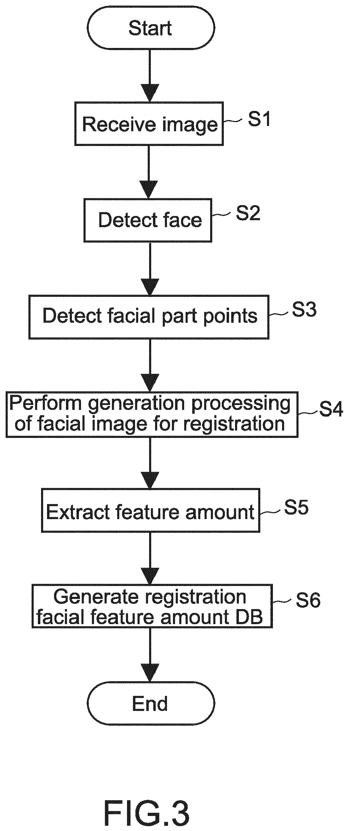

Referring to Fig. 3, an information processing method associated with the facial information registration using the information processing apparatus 10 will be described.

As shown in Fig. 3, the image acquisition unit 2 acquires an input facial image for registration (Step 1 (hereinafter, Step will be abbreviated as S)).

Next, the facial detection unit 3 detects a facial region from the input facial image for registration (S2).

Next, the facial part detection unit 4 detects a plurality of facial part points in the detected facial region (S3).

Next, as described above with reference to Fig. 2, the generation unit 5 generates, on the basis of a plurality of mutually different combinations of facial ranges and resolutions, which are shown in the facial range and resolution list 7 prepared in advance, a plurality of facial images for registration for each of the combinations (S4).

Next, the facial feature amount extraction unit 6 extracts a feature amount from each of the generated facial images for registration (S5).

Next, the feature amount extracted for each facial image for registration is stored in the registration facial feature amount DB 9, associated with the corresponding facial image for registration, the facial range used when generating the facial image for registration, information regarding the resolution, and the input facial image for registration. In this manner, the person facial information is registered.

### [Regarding Facial Authentication]

### (Configuration of Information Processing Apparatus)

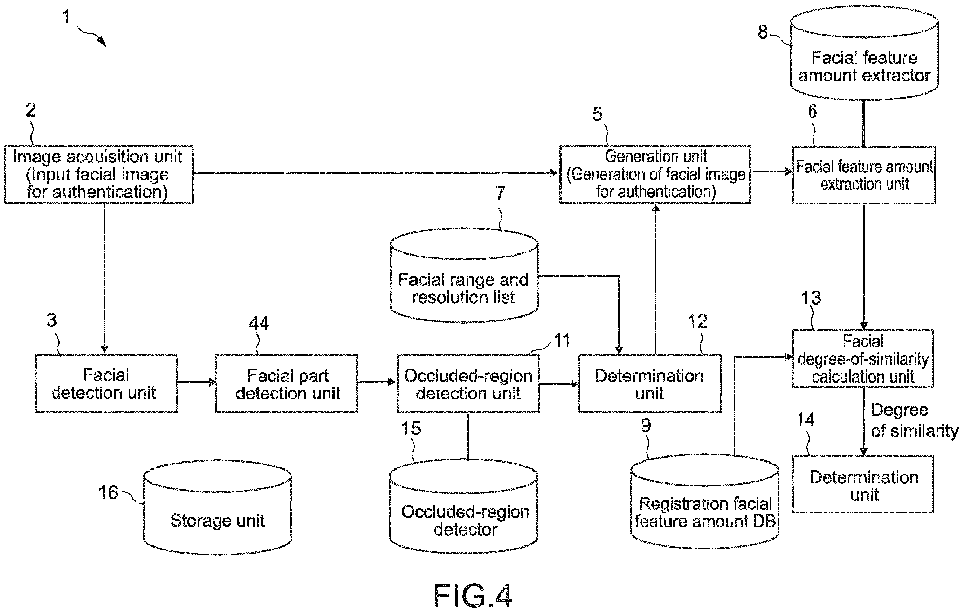

Referring to Fig. 4, an information processing apparatus 1 to be used for the facial authentication will be described. Configurations having functions similar to those of the above-mentioned information processing apparatus 1 will be denoted by similar reference signs and the descriptions will be omitted in some cases.

As shown in Fig. 4, the information processing apparatus 1 includes an image acquisition unit 2, a facial detection unit 3, a facial part detection unit 44, a generation unit 5, a facial feature amount extraction unit 6, a facial range and resolution list 7, a facial feature amount extractor 8, a registration facial feature amount DB 9, an occluded-region detection unit 11, a determination unit 12, a facial degree-of-similarity calculation unit 13, a determination unit 14, an occluded-region detector 15, and a storage unit 16.

The image acquisition unit 2 acquires a facial image (referred to as input facial image for authentication) of the person to be authenticated, which is taken by a camera (not shown) or the like.

The facial detection unit 3 detects a facial portion from the input facial image for authentication acquired by the image acquisition unit 2.

The facial part detection unit 44 detects a plurality of facial part points from the facial portion detected by the facial detection unit 3 and calculates reliability of each of the facial part points.

The generation unit 5 generates a facial image for authentication on the basis of the combination of the facial range and the resolution, which is determined by the determination unit 12 to be described later. The details will be described later.

The facial feature amount extraction unit 6 extracts a facial feature amount in the facial image for authentication generated by the generation unit 5, using the facial feature amount extractor 8.

The facial range and resolution list 7 is as described above.

The registration facial feature amount DB 9 has prestored registered person facial information such as the feature amount of the facial image for registration, which is generated by the above-mentioned information processing associated with the facial information registration.

The occluded-region detection unit 11 detects an occluded region through the occluded-region detector 15 on the basis of the plurality of facial part points detected by the facial part detection unit 44 and the calculated reliability of each of the facial part points.

The occluded region refers to a region in which a part of the face is hidden by an occlusion object such as a mask, a cap, and sunglasses, a shadow, a hand, and the like.

The occluded-region detection unit 11 performs threshold processing and detects occlusion part points associated with the occluded region through the occluded-region detector 15 on the basis of the plurality of detected facial part points and the reliability of each of the facial part points. The facial part points the reliability of which is equal to or higher than a threshold are defined as non-occlusion part points. The facial part points lower than the threshold are defined as occlusion part points. The non-occlusion part points are points considered as the facial part points on which no occlusion objects are superimposed. For example, in Fig. 5 showing an image of the person 40A to be authenticated wearing the mask 17 as an occlusion object, a plurality of small circles shown as the solid lines or the broken lines is facial part points 36 detected by the facial part detection unit 44. In the plurality of facial part points 36, the solid-line small circles indicate non-occlusion part points 36A that are facial part points the calculated reliability of which is equal to or higher than the threshold and the broken-line small circles indicate occlusion part points 36B that are facial part points the calculated reliability of which is lower than the threshold. In a case where the non-occlusion part points 36A and the occlusion part points 36B are not particularly distinguished, they will be referred to as the facial part points 36.

The determination unit 12 determines a combination for generating a facial image for authentication from the plurality of combinations of facial ranges and resolutions, which is shown in the facial range and resolution list 7, on the basis of information regarding the occlusion part points detected by the occluded-region detection unit 11.

The determination unit 12 determines a combination that does not overlap the detected occlusion part points and has the highest assessment value, as a combination for generating a facial image for authentication.

More specifically, the determination unit 12 selects, from the facial range and resolution list 7, one facial range of the combination associated with the highest assessment value. The determination unit 12 determines whether or not the selected facial range and the detected occlusion part points overlap each other.

In a case where they do not overlap each other, the determination unit 12 determines to employ the combination including the facial range as a combination for generating a facial image for authentication.

In a case where they overlap each other, the determination unit 12 selects, from the facial range and resolution list 7, one facial range of the combination associated with the next highest assessment value. The determination unit 12 determines whether or not the selected facial range and the occlusion part points overlap each other.

In this manner, until a result that the selected facial range and the occlusion part points do not overlap each other is obtained, the facial ranges shown in the facial range and resolution list 7 are verified in a descending order of the assessment value. In this manner, the determination unit 12 selects a combination that does not overlap the detected occlusion part points and has the highest assessment value.

As described above, the generation unit 5 generates the facial image for authentication with the combination determined by the determination unit 12.

The facial degree-of-similarity calculation unit 13 serving as a degree-of-similarity calculation unit uses the feature amount of the facial image for authentication, which is extracted by the facial feature amount extraction unit 6, and the feature amount of the facial image for registration, which has been stored in the registration facial feature amount DB 9, for calculating a degree of similarity of the facial image for authentication and the facial image for registration.

On the basis of the degree of similarity calculated by the facial degree-of-similarity calculation unit 13, the determination unit 14 determines whether or not the person to be authenticated shown in the facial image for authentication is a person who has registered the facial information in advance. As a specific example, in a case where the degree of similarity is equal to or higher than a predetermined value determined in advance, it is determined that the person to be authenticated is the person registered in advance. On the other hand, in a case where the degree of similarity is lower than the predetermined value, it is determined that the person to be authenticated is a person not registered.

The storage unit 16 is a memory device such as a RAM, a disc device, or the like and stores a program associated with execution of the facial authentication.

The program causes the information processing apparatus 1 to perform a step of determining, on the basis of the occluded region of the face in the input facial image for authentication, a trimming facial range from the input facial image for authentication and a resolution and a step of generating a facial image for authentication in/at the trimming facial range and the resolution that are determined.

### (Information Processing Method Associated with Facial Authentication)

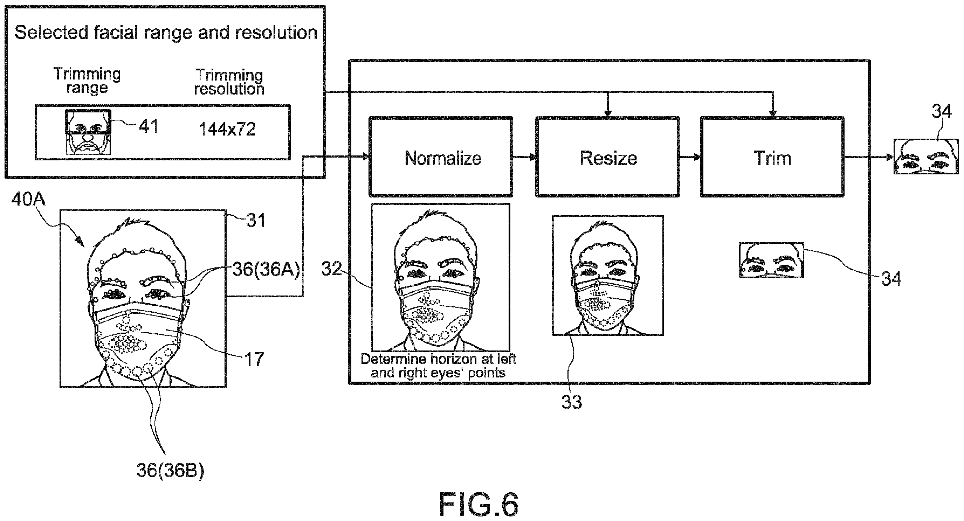

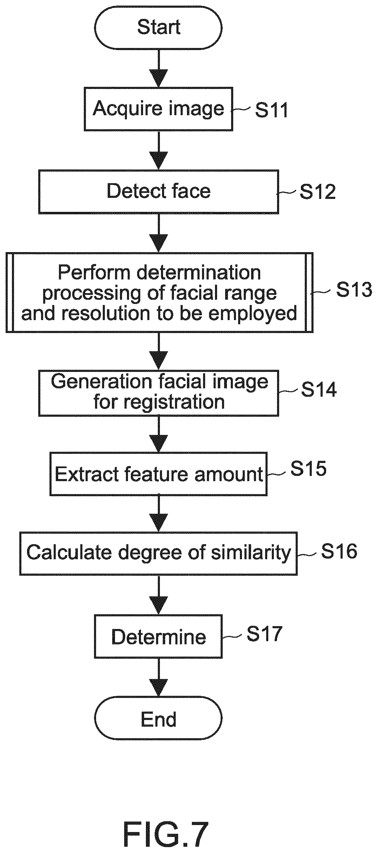

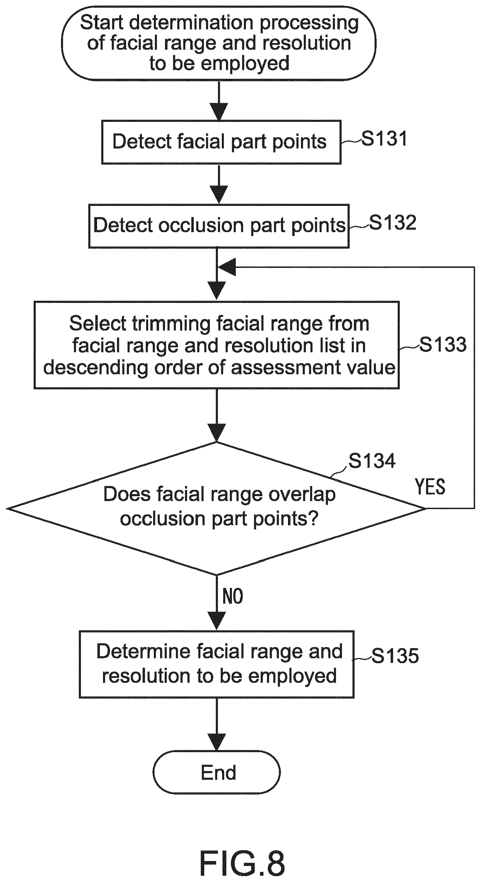

An information processing method associated with the facial authentication using the information processing apparatus 1 will be described. Fig. 6 is a schematic diagram describing a flow of the facial authentication. Fig. 7 is a processing flow diagram of the facial authentication in the information processing apparatus 1. Fig. 8 is a detailed flow in Step 13 of the processing flow of Fig. 7, and is a flow diagram of the determination processing of the combination of the facial range and the resolution to be used for generating the facial image for authentication. Hereinafter, the description will be given following the flow diagrams of Figs. 7 and 8, referring to Fig. 6 as necessary.

The image acquisition unit 2 acquires an input facial image for authentication (S11). Here, as shown in Fig. 6, it is assumed that an image of the person 40A to be authenticated wearing the mask 17 is acquired as the input facial image for authentication 31A.

Next, the facial detection unit 3 detects a facial region from the input facial image for authentication (S12).

Next, the determination unit 12 determines the combination of the facial range and the resolution to be employed for generating a facial image for authentication (S13). The details of the processing in Step 13 will be described.

As shown in Fig. 8, the facial part detection unit 44 detects a plurality of facial part points the detected facial region and calculates reliability of each of the plurality of facial part points (S131).

Next, the occluded-region detection unit 11 performs threshold processing and detects occlusion part points on the basis of the plurality of detected facial part points and the reliability calculated for each of the facial part points (S132). For example, as shown in Fig. 6, the occlusion part points 36B shown as the broken-line small circles are detected.

Next, the determination unit 12 selects, from the facial range and resolution list 7, one facial range of the combination associated with the highest assessment value (S133).

Next, the determination unit 12 determines whether or not the selected facial range and the detected occlusion part points overlap each other (S134).

In a case where it is determined that they do not overlap each other in Step 134 (NO), the determination unit 12 determines the combination including the selected facial range as a combination to be used for generating a facial image for authentication (S135).

In a case where it is determined that they overlap each other in Step 134 (YES), the processing returns to Step 133 and the processing is repeated. In Step 133, the determination unit 12 selects, from the facial range and resolution list 7, one facial range of the combination associated with the next highest assessment value. In Step 134, the determination unit 12 determines whether or not the selected facial range and the occlusion part points overlap each other.

In this manner, until a result that the selected facial range and the occlusion part points do not overlap each other is obtained, the determination unit 12 verifies the facial ranges shown in the facial range and resolution list 7 in a descending order of the assessment value. Accordingly, the combination that does not overlap the detected occlusion part points and has the highest assessment value is selected from the plurality of combinations.

Refer back to Fig. 7. Next, the generation unit 5 generates a facial image for authentication on the basis of the combination determined by the determination unit 12 of the facial range and the resolution (S14).

Next, the facial feature amount extraction unit 6 extracts a feature amount from each of the generated facial images for authentication (S15).

Next, the facial degree-of-similarity calculation unit 13 calculates a degree of similarity of the facial image for authentication and the facial image for registration by using the extracted feature amount of the facial image for authentication and the feature amount of the facial image for registration prestored in the registration facial feature amount DB 9 (S16). The facial image for registration to be compared is an image generated with the same combination as the combination of the facial range and the resolution that have been used when generating a facial image for authentication.

Next, the determination unit 14 performs facial authentication on the basis of the calculated degree of similarity and determines whether or not the person to be authenticated is a registered person (S17) .

In this embodiment, available calculation resources are limited in practice, and therefore in a case where the face has no occluded regions, a facial image for authentication trimmed so that the facial part points of the eyes, the nose, and the mouth most valid for facial authentication has a resolution as high as possible can be generated.

On the other hand, if there is an occluded region due to the mask 17 as in the example shown in Fig. 14, the trimming facial range can be extended so that the facial part points of the hair line, which are not often used in normal facial authentication, in addition to the facial part points of the eyes and the eyebrows are included in the facial image for authentication. Then, a facial image for authentication can be generated in this facial range at the resolution as high as possible in consideration of the calculation resources.

Moreover, if there is an occluded region due to the mask 17 and the cap 18 as in the example shown in Fig. 15, a periphery of the eyes region, such as the eyes and the eyebrows, is set as the trimming facial range, and a facial image for authentication can be generated in this facial range at the resolution as high as possible in consideration of the calculation resources.

In this manner, in this embodiment, on the basis of the information regarding the occluded region, the facial image for authentication can be generated in/at more suitable facial range and resolution. That is, even in a case where there is an occluded region in the facial image to be authenticated, the facial image for authentication is generated in/at the most suitable facial range and resolution for facial authentication by using limited calculation resources such as facial information in a non-occluded region. Accordingly, the authentication accuracy can be improved not only in the facial authentication with the facial image in a case where there are no occluded regions of course but also in the facial authentication with the facial image having the occluded region.

Here, irrespective of the size of the occluded region, in a case of performing the processing of simply excluding the occluded region on the facial image for performing the facial authentication, as the occluded region becomes larger, information that can be acquired from the face decreases and the authentication accuracy lowers.

In this regards, since in this embodiment, the facial authentication is performed using the facial image for authentication generated in/at more suitable facial range and resolution on the basis of the information regarding the occluded region as described above, the authentication accuracy can be improved.

### <Second Embodiment>

In the above-mentioned first embodiment, the trimming facial range and the resolution to be employed for the facial image for authentication generation is determined using the detected facial part points and the reliability of the facial part points, though not limited thereto. For example, the facial image with the score indicating the degree of validity in the facial identification may be determined. Hereinafter, it will be described as a second embodiment.

Also in the second embodiment, as in the first embodiment, information associated with a facial image for registration is prepared in advance. Then, information associated with the facial image for registration and information associated with facial image for authentication are compared with each other and facial authentication is performed. Since the registration of the facial information is similar to that of the first embodiment, the description will be omitted. In this embodiment, the facial authentication using facial images with scores will be mainly described. Configurations of similar to those of the first embodiment will be denoted by similar reference signs and the descriptions will be omitted in some cases.

### (Configuration of Information Processing Apparatus)

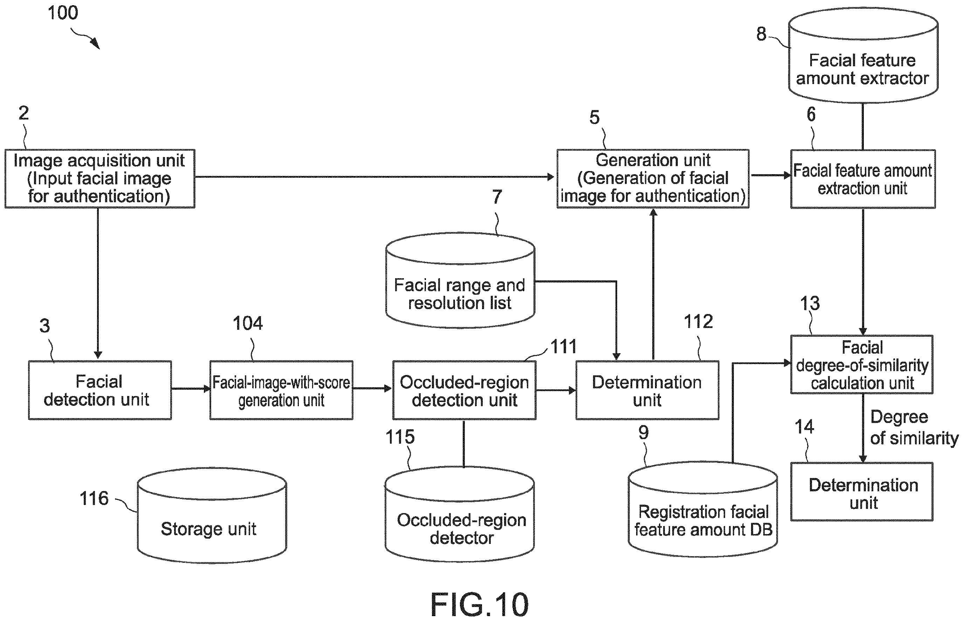

Referring to Fig. 10, an information processing apparatus 100 to be used for the facial authentication will be described.

As shown in Fig. 10, the information processing apparatus 100 includes an image acquisition unit 2, a facial detection unit 3, a facial-image-with-score generation unit 104, a generation unit 5, a facial feature amount extraction unit 6, a facial range and resolution list 7, a facial feature amount extractor 8, a registration facial feature amount DB 9, an occluded-region detection unit 111, a determination unit 112, a facial degree-of-similarity calculation unit 13, a determination unit 14, an occluded-region detector 115, and a storage unit 116.

The image acquisition unit 2 acquires a facial image of a person to be authenticated, which is taken by a camera (not shown) or the like (hereinafter, referred to as input facial image for authentication).

The facial detection unit 3 detects a facial portion from the input facial image for authentication acquired by the image acquisition unit 2.

The facial-image-with-score generation unit 104 generates a facial image with a score in the detected facial portion. The facial image with the score is an image in which the degree of validity in the facial identification is colored, for example. For example, an attention branch network (ABN) can be used for generating the facial image with the score. The ABN is a technique that visualizes a feature map showing an attention region by a convolutional neural network (CNN) in image recognition and utilizes it for identification. It can be said that the facial image with the score generated by the facial-image-with-score generation unit 104 is a map of characteristic sites that can be easily distinguished from the others.

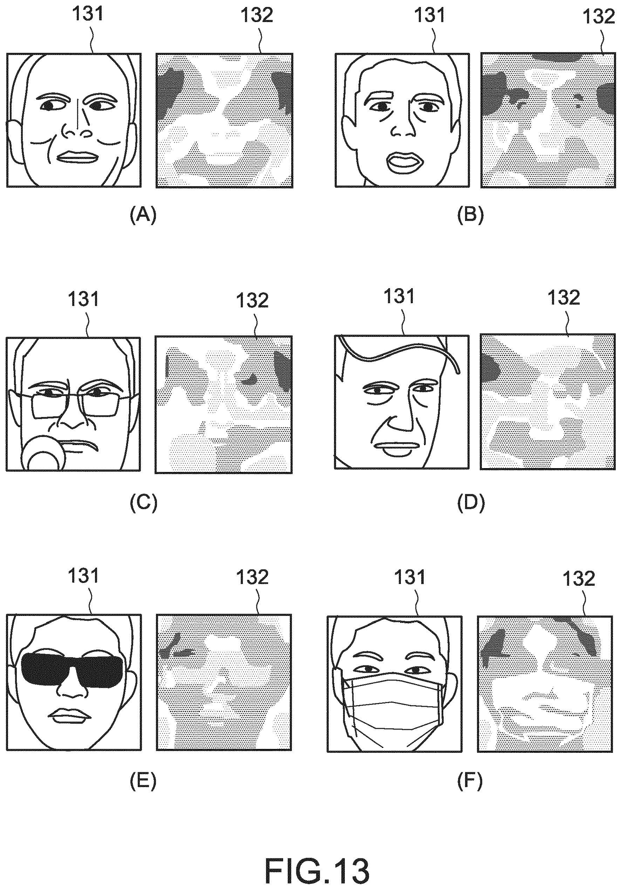

Examples of the facial image with the score are shown in Fig. 13(A) to (F). In each figure of Fig. 13(A) to (F), the left side shows facial portion images 131 and the right side shows facial images with scores 132 generated by the facial-image-with-score generation unit 104 using the facial portion images 131. In Fig. 13, in the facial images with the scores, differences in the color indicating the degree of validity in the facial identification are represented as differences in the density of dots. A region having dense dots indicates that it is a valid region for the facial identification.
Fig. 13(A) and (B) all show facial image examples of people with no occlusion objects that occlude the faces. The facial images with the scores 132 in the both figures indicate that the hair line is a valid region for the facial identification. In addition, the facial image with the score 132 in Fig. 13(B) also indicates that the eyebrows are also valid regions for the facial identification.
Fig. 13(C) shows a facial image of a person wearing eyeglasses. This figure indicates that, for example, the hair line is a valid region for the facial identification.
Fig. 13(D) shows a facial image example of a person wearing a cap that is an occlusion object. The facial image with the score 132 in this figure indicates that the hair line not occluded by the cap is a valid region for the facial identification.
Fig. 13(E) shows a facial image example of a person wearing sunglasses that are an occlusion object. The facial image with the score 132 in this figure indicates that the hair line and the eyebrows are valid regions for the facial identification.
Fig. 13(F) shows a facial image example of a person wearing a mask that is an occlusion object. The facial image with the score 132 in this figure indicates that the hair line and the eyebrows are valid regions for the facial identification.
In this manner, the facial-image-with-score generation unit 104 generates a map in which the characteristic sites valid for the facial identification are emphasized. In a case where there is an occlusion object, avoiding the region where this occlusion object is present, a map in which more characteristic sites valid for the facial identification are emphasized is generated from the remaining region. It should be noted that the maps refer to facial images with scores.

The generation unit 5 generates a facial image for authentication on the basis of the combination of the facial range and the resolution, which are determined by the determination unit 112 to be described later. The details will be described later.

The facial feature amount extraction unit 6 extracts the facial feature amount in the facial image for authentication generated by the generation unit 5, using the facial feature amount extractor 8.

The facial range and resolution list 7 is as described above.

The registration facial feature amount DB 9 has prestored facial information associated with a registered person, such as the feature amount of the facial image for registration, which has been generated by the information processing associated with the registration described in the first embodiment above.

The occluded-region detection unit 111 detects the occluded region through the occluded-region detector 115 on the basis of the facial image with the score, which has been generated by the facial-image-with-score generation unit 104. Specifically, on the basis of pixel information that constitutes the facial image with the score, the occluded-region detection unit 111 performs threshold processing on a pixel-by-pixel basis and detects occluded pixels associated with the occluded region. Pixels having scores equal to or higher than a threshold are defined as the occluded pixels. For example, a group of a plurality of proximate occluded pixels constitutes the occluded region. Pixels lower than the threshold are defined as non-occluded pixels. A region constituted by the group of a plurality of proximate occluded pixels is a non-occluded region where no occlusion objects are superimposed. Taking Fig. 13(F) as an example, in the facial image with the score 132 of the person to be authenticated wearing the mask 17 as the occlusion object, a region having rough dots is an occluded region. It should be noted that it is assumed that the region having rough dots includes a region having no dots.

The determination unit 112 determines a combination to be used for generating a facial image for authentication from the plurality of combinations of facial ranges and resolutions shown in the facial range and resolution list 7 on the basis of occluded pixels associated with the occluded region detected by the occluded-region detection unit 111.

The determination unit 112 determines a combination that does not overlap the detected occluded pixels and has the highest assessment value as the combination for generating a facial image for authentication.

More specifically, the determination unit 112 selects, from the facial range and resolution list 7, one facial range of the combination associated with the highest assessment value. The determination unit 112 determines whether or not the selected facial range and the detected occluded pixels overlap each other.

In a case where they do not overlap each other, the determination unit 112 determines to employ the combination including the facial range as the combination to be used for generating a facial image for authentication.

In a case where they overlap each other, the determination unit 112 selects, from the facial range and resolution list 7, one facial range of the combination associated with the next highest assessment value. The determination unit 112 determines whether or not the selected facial range and the occluded pixels overlap each other.

In this manner, until a result that the selected facial range and the occluded pixels do not overlap each other is obtained, the facial ranges of the combinations shown in the facial range and resolution list 7 are verified in a descending order of the assessment value. In this manner, the determination unit 112 selects a combination that does not overlap the detected occluded pixels and has the highest assessment value.

As described above, the generation unit 5 generates a facial image for authentication with the combination determined by the determination unit 112.

The facial degree-of-similarity calculation unit 13 calculates a degree of similarity of the facial image for authentication and the facial image for registration, using a facial feature amount extracted by the facial feature amount extraction unit 6 from the facial image for authentication generated by the generation unit 5 and registration facial feature amount information stored in the registration facial feature amount DB 9.

On the basis of the degree of similarity calculated by the facial degree-of-similarity calculation unit 13, the determination unit 14 determines whether or not the person to be authenticated shown in the facial image for authentication is a person who has registered the facial information in advance. As a specific example, in a case where the degree of similarity is equal to or higher than a predetermined value determined in advance, it is determined that the person to be authenticated is the person registered in advance. On the other hand, in a case where the degree of similarity is lower than the predetermined value, it is determined that the person to be authenticated is a person not registered.

The storage unit 116 is a memory device such as a RAM, a disc device, or the like and stores a program associated with execution of the facial authentication. The program causes the information processing apparatus 100 to perform a step of determining, on the basis of the occluded region of the face in the input facial image for authentication, a trimming facial range from the input facial image for authentication and a resolution and a step of generating a facial image for authentication in/at the trimming facial range and the resolution that are determined.

### (Information Processing Method Associated with Facial Authentication)

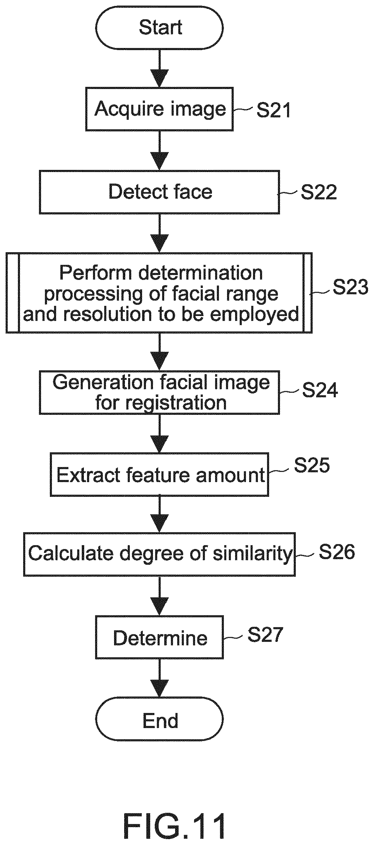

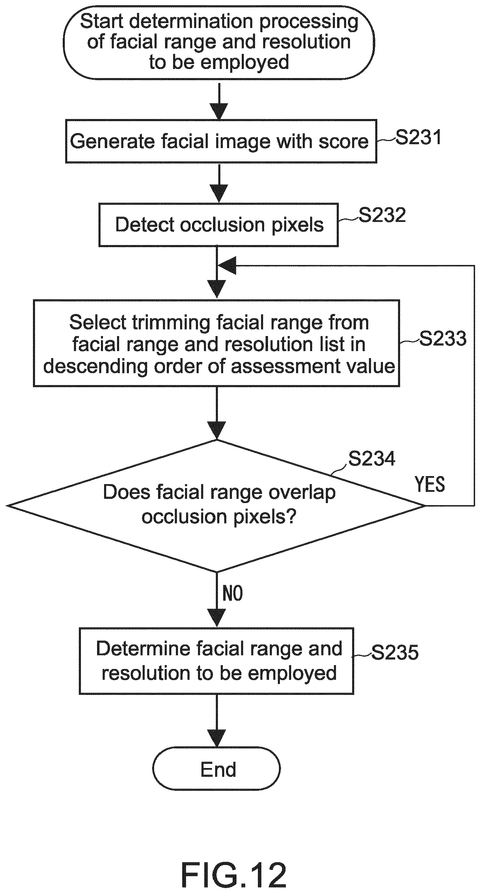

An information processing method associated with the facial authentication using the information processing apparatus 100 will be described. Fig. 11 is a processing flow diagram of the facial authentication in the information processing apparatus 100. Fig. 12 is a detailed flow in Step 23 of the processing flow of Fig. 11, and is a flow diagram of the determination processing of the combination of the facial range and the resolution to be used for generating the facial image for authentication. Hereinafter, the description will be given following the flow diagrams of Figs. 11 and 12.

The image acquisition unit 2 acquires an input facial image for authentication (S21).

Next, the facial detection unit 3 detects a facial region from the input facial image for authentication (S22).

Next, the determination unit 112 determines the combination of the facial range and the resolution to be employed for generating a facial image for authentication (S23). The details of the processing in Step 23 will be described.

As shown in Fig. 12, the facial-image-with-score generation unit 104 generates a facial image with a score (S231).

Next, the occluded-region detection unit 111 performs threshold processing and detects occluded pixels on the basis of the facial image with the score (S232).

Next, the determination unit 112 selects, from the facial range and resolution list 7, one facial range of the combination associated with the highest assessment value (S233).

Next, the determination unit 112 determines whether or not the selected facial range and the detected occluded pixels overlap each other (S234).

In a case where it is determined that they do not overlap each other in Step 234 (NO), the determination unit 112 determines the combination including the selected facial range as a combination to be used for generating a facial image for authentication (S235).

In a case where it is determined that they overlap each other in Step 234 (YES), the processing returns to Step 233 and the processing is repeated. In Step 233, the determination unit 112 selects, from the facial range and resolution list 7, one facial range of the combination associated with the next highest assessment value. In Step 234, the determination unit 112 determines whether or not the selected facial range and the occluded pixels overlap each other.

In this manner, until a result that the selected facial range and the occluded pixels do not overlap each other is obtained, the determination unit 112 verifies the facial ranges shown in the facial range and resolution list 7 in a descending order of the assessment value. Accordingly, the combination that does not overlap the detected occluded pixels and has the highest assessment value is selected from the plurality of combinations.

Refer back to Fig. 11. Next, the generation unit 5 generates a facial image for authentication on the basis of the combination of the facial range and the resolution determined by the determination unit 112 (S24).

Next, the facial feature amount extraction unit 6 extracts a feature amount from each of the generated facial images for authentication (S25).

Next, the facial degree-of-similarity calculation unit 13 calculates a degree of similarity of the facial image for authentication and the facial image for registration by using the extracted feature amount of the facial image for authentication and the feature amount of the facial image for registration prestored in the registration facial feature amount DB 9 (S26). The facial image for registration to be compared is an image generated with the same combination as the combination of the facial range and the resolution that have been used when generating a facial image for authentication. Next, the determination unit 14 performs facial authentication on the basis of the calculated degree of similarity and determines whether or not the person to be authenticated is a registered person (S27).

As described above, also in this embodiment, as in the first embodiment, the facial image for authentication is generated in/at more suitable facial range and resolution on the basis of the information regarding the occluded region. Accordingly, the authentication accuracy can be improved not only in the facial authentication with the facial image in a case where there are no occluded regions of course but also in the facial authentication with the facial image having the occluded region.

Embodiments of the present technology are not limited only to the above-mentioned embodiments and various changes can be made without departing from the gist of the present technology.

It should be noted that the present technology may also take the following configurations.
(1) An information processing apparatus, including:
   a determination unit that determines, on the basis of an occluded region of a face in an input facial image for authentication, a trimming facial range from the input facial image for authentication and a resolution; and
   a generation unit that generates a facial image for authentication in/at the trimming facial range and the resolution determined by the determination unit.
(2) The information processing apparatus according to (1), in which
   the determination unit determines the trimming facial range and the resolution to be used for generating the facial image for authentication from a plurality of combinations of facial ranges to be trimmed and resolutions, the plurality of combinations being determined in advance.
(3) The information processing apparatus according to (2), further including:
   a facial part detection unit that detects a plurality of facial part points from the input facial image for authentication and calculates reliability for each of the facial part points; and
   an occluded-region detection unit that detects, from the plurality of facial part points on the basis of the reliability, occlusion part points associated with the occluded region, in which
   an assessment value is associated with each of the plurality of combinations, and
   the determination unit selects, from the plurality of combinations, a combination, the trimming facial range of which does not overlap the occlusion part points and the assessment value of which is highest, and determines the combination as a combination to be used for generating the facial image for authentication.
(4) The information processing apparatus according to (2), further including:
   a facial-image-with-score generation unit that generates a facial image with a score indicating a degree of validity in facial identification; and
   an occluded-region detection unit that detects, on the basis of pixel information that constitutes the facial image with the score, occluded pixels associated with the occluded region, in which
   an assessment value is associated with each of the plurality of combinations, and
   the determination unit selects, from the plurality of combinations, a combination, the trimming facial range of which does not overlap the occluded pixels and the assessment value of which is highest, and determines the combination as a combination to be used for generating the facial image for authentication.
(5) The information processing apparatus according to any one of (2) to (4), in which
   the resolution is, for each of the combinations, set so that a facial image for authentication to be trimmed in the trimming facial range is generated with a constant amount of calculation.
(6) The information processing apparatus according to (5), further including
   a feature amount extraction unit that extracts a feature amount of the facial image for authentication, in which
   the amount of calculation is calculated using the total number of pixels of the trimming facial range or the number of multiply-accumulate operations at a time of feature amount extraction by the feature amount extraction unit.
(7) The information processing apparatus according to any one of (1) to (6), further including:
   a feature amount extraction unit that extracts a feature amount of the facial image for authentication; and
   a degree-of-similarity calculation unit that calculates, on the basis of the feature amount of the facial image for authentication that is extracted by the feature amount extraction unit and a feature amount of a facial image for registration that is prepared in advance, a degree of similarity of the facial image for authentication and the facial image for registration.
(8) The information processing apparatus according to (7), in which
   the feature amount of the facial image for registration is a feature amount extracted by the feature amount extraction unit in each of a plurality of facial images for registration generated in accordance with the plurality of combinations using an input facial image for registration that is prepared in advance.
(9) An information processing method, including:
   determining, on the basis of an occluded region of a face in an input facial image for authentication, a trimming facial range from the input facial image for authentication and a resolution; and
   generating a facial image for authentication in/at the determined trimming facial range and resolution.
(10) A program that causes an information processing apparatus to execute:
   a step of determining, on the basis of an occluded region of a face in an input facial image for authentication, a trimming facial range from the input facial image for authentication and a resolution; and
   a step of generating a facial image for authentication in/at the determined trimming facial range and resolution.

### Reference Signs List

- 1, 100: information processing apparatus
- 5: generation unit
- 6: facial feature amount extraction unit (feature amount extraction unit)
- 11, 111: occluded-region detection unit
- 12, 112: determination unit
- 13: facial degree-of-similarity calculation unit (degree-of-similarity calculation unit)
- 21: input facial image for registration
- 24: facial image for registration
- 31: input facial image for authentication
- 34: facial image for authentication
- 36: facial part point
- 36B: occlusion part point
- 44: facial part detection unit
- 71: trimming facial range
- 72: resolution
- 73: assessment value
- 104: facial-image-with-score generation unit
- 132: facial image with score

## Claims

1. An information processing apparatus, comprising:
a determination unit that determines, on a basis of an occluded region of a face in an input facial image for authentication, a trimming facial range from the input facial image for authentication and a resolution; and
a generation unit that generates a facial image for authentication in/at the trimming facial range and the resolution determined by the determination unit.

2. The information processing apparatus according to claim 1, wherein
the determination unit determines the trimming facial range and the resolution to be used for generating the facial image for authentication from a plurality of combinations of facial ranges to be trimmed and resolutions, the plurality of combinations being determined in advance.

3. The information processing apparatus according to claim 2, further comprising:
a facial part detection unit that detects a plurality of facial part points from the input facial image for authentication and calculates reliability for each of the facial part points; and
an occluded-region detection unit that detects, from the plurality of facial part points on a basis of the reliability, occlusion part points associated with the occluded region, wherein
an assessment value is associated with each of the plurality of combinations, and
the determination unit selects, from the plurality of combinations, a combination, the trimming facial range of which does not overlap the occlusion part points and the assessment value of which is highest, and determines the combination as a combination to be used for generating the facial image for authentication.

4. The information processing apparatus according to claim 2, further comprising:
a facial-image-with-score generation unit that generates a facial image with a score indicating a degree of validity in facial identification; and
an occluded-region detection unit that detects, on a basis of pixel information that constitutes the facial image with the score, occluded pixels associated with the occluded region, wherein
an assessment value is associated with each of the plurality of combinations, and
the determination unit selects, from the plurality of combinations, a combination, the trimming facial range of which does not overlap the occluded pixels and the assessment value of which is highest, and determines the combination as a combination to be used for generating the facial image for authentication.

5. The information processing apparatus according to claim 2, wherein
the resolution is, for each of the combinations, set so that a facial image for authentication to be trimmed in the trimming facial range is generated with a constant amount of calculation.

6. The information processing apparatus according to claim 5, further comprising
a feature amount extraction unit that extracts a feature amount of the facial image for authentication, wherein
the amount of calculation is calculated using the total number of pixels of the trimming facial range or the number of multiply-accumulate operations at a time of feature amount extraction by the feature amount extraction unit.

7. The information processing apparatus according to claim 2, further comprising:
a feature amount extraction unit that extracts a feature amount of the facial image for authentication; and
a degree-of-similarity calculation unit that calculates, on a basis of the feature amount of the facial image for authentication that is extracted by the feature amount extraction unit and a feature amount of a facial image for registration that is prepared in advance, a degree of similarity of the facial image for authentication and the facial image for registration.

8. The information processing apparatus according to claim 7, wherein
the feature amount of the facial image for registration is a feature amount extracted by the feature amount extraction unit in each of a plurality of facial images for registration generated in accordance with the plurality of combinations using an input facial image for registration that is prepared in advance.

9. An information processing method, comprising:
determining, on a basis of an occluded region of a face in an input facial image for authentication, a trimming facial range from the input facial image for authentication and a resolution; and
generating a facial image for authentication in/at the determined trimming facial range and resolution.

10. A program that causes an information processing apparatus to execute:
a step of determining, on a basis of an occluded region of a face in an input facial image for authentication, a trimming facial range from the input facial image for authentication and a resolution; and
a step of generating a facial image for authentication in/at the determined trimming facial range and resolution.
